# EUROPEAN PATENT SPECIFICATION

(11) **EP 4 376 197 B1**
(45) Date of publication and mention of the grant of the patent: **15.04.2026**
(21) Application number: 23835827.9
(22) Date of filing: 05.07.2023
(51) Int. Cl.: H01M 50/367, H01M 50/358, H01M 50/375, H01M 50/211, H01M 50/249, H01M 50/251, H01M 50/209, H01M 50/258, H01M 50/271, H01M 50/30, H01M 50/325, H01M 50/342

(54) **BATTERY PACK**
BATTERIEPACK
BLOC-BATTERIE

(30) Priority: 06.07.2022 KR 20220083104
(43) Date of publication of application: 29.05.2024
(73) Proprietor: LG ENERGY SOLUTION, LTD., Seoul 07335 (KR)
(72) Inventor: KIM, Ki Young, Daejeon 34122 (KR); LEE, Hyoung Suk, Daejeon 34122 (KR); SHIN, Ju Hwan, Daejeon 34122 (KR); LEE, Jae Hyun, Daejeon 34122 (KR); JANG, Byung Do, Daejeon 34122 (KR)
(74) Representative: Plasseraud IP
(86) International application number: PCT/KR2023/009504
(87) International publication number: WO 2024/010361

(56) References cited:
- CN-A- 112 531 246
- CN-U- 215 816 098
- DE-A1- 102013 216 071
- KR-A- 20200 143 976
- KR-A- 20210 004 189
- KR-A- 20220 091 852
- US-A1- 2012 263 982
- US-A1- 2019 157 636
- US-B1- 6 696 196

## Description

### [Technical Field]

The present invention relates to a battery pack including battery cells or battery modules.

More specifically, the present invention relates to a battery pack capable of efficiently discharging a venting gas generated in the battery pack to the outside of the battery pack and preventing a venting gas from flowing back into the battery pack.

### [Background Art]

Battery packs applied to electric vehicles and the like have a structure in which a plurality of battery modules including a plurality of secondary batteries are connected in series or parallel to obtain a high output. In addition, the secondary battery may include positive and negative electrode current collectors, a separator, active materials, an electrolyte, and the like and repeatedly perform charging/discharging by electrochemical reactions between these components.

The secondary battery may generate a gas therein at any time during use while repeatedly performing charging/discharging, and this gas is called a venting gas. For example, when an overcurrent flows, an internal temperature of the secondary battery increases rapidly. This rapid increase in temperature may cause a decomposition reaction of the electrolyte to generate a gas. When the gas is generated by the secondary battery inside the battery pack, the gas may be collected inside the pack to cause the battery pack to explode or flow into the interior of a vehicle or the like through a cooling duct or the like of the battery pack. Therefore, the battery pack includes a venting mechanism such as a gas venting channel for decreasing internal pressure by discharging internal gas to the outside.

For example, when thermal runaway occurs in one of the plurality of battery modules installed in the battery pack such that a venting gas is generated, the venting gas may be discharged through the venting mechanism.

However, there is a case in which the venting gas cannot be discharged to the outside and flows back into the battery pack. For example, when a rupture sheet installed at a venting outlet of the gas venting channel is not ruptured even when a pressure reaches a set pressure and thus the pressure in the gas venting channel becomes higher, the venting gas may rather flow back into the battery pack. Alternatively, there may be a case in which, when the thermal runaway occurs in a plurality of battery modules, the venting gas flows back from a battery module side with a higher thermal runaway pressure to a battery module side having a lower pressure through the gas venting channel.

Therefore, since the gas venting channel for discharging the venting gas rather becomes a passage propagating thermal runaway to another module, there is a risk of simultaneous occurrence of multiple thermal runaways.

### [Related Art Document]

(Patent Document 1) Korean Patent Application Laid-Open No. 10-2018-0039986
Documents US 2019/157636 A1 and DE 10 2013 216071 A1 are about discharge of venting gas in battery packs.

### [Technical Problem]

The present invention intends to solve the above problems and is directed to providing a battery pack capable of preventing or delaying thermal runaway propagation by smoothly discharging a venting gas and at the same time, preventing a backflow thereof.

### [Technical Solution]

To this end, the invention relates to a battery pack according to claim 1.

The battery pack after the invention may present features from the dependent claims 2 to 15 in any combination allowed by the claims.

### [Advantageous Effects]

According to various embodiments of the present invention, it is possible to efficiently discharge a venting gas to an outside of a battery pack.

In addition, according to various embodiments, it is possible to prevent a venting gas of a gas venting channel from flowing back into the battery pack, thereby preventing thermal runaway from propagating to an adjacent battery module.

### [Brief Description of the Drawings]

FIG. 1 is a perspective view illustrating a battery pack according to one embodiment of the present invention.
FIG. 2 is a coupled perspective view of a backflow prevention unit according to the present disclosure.
FIG. 3 is an exploded perspective view of the backflow prevention unit according to the present invention.
FIG. 4 is a schematic diagram illustrating an operation of a venting plate in FIG. 2.
FIG. 5 is a schematic diagram illustrating an operating state of the backflow prevention unit of the present disclosure.
FIG. 6 is a schematic diagram illustrating a path through which the venting gas is discharged from the battery pack in FIG. 1.
FIG. 7 is a view illustrating an example of a venting outlet provided in the battery pack of the present invention.
FIG. 8 is a schematic diagram illustrating a battery pack according to another embodiment of the present invention.
FIG. 9 is a schematic diagram illustrating an operation of a venting plate in FIG. 8.
FIG. 10 is a schematic diagram illustrating a battery pack according to still another embodiment of the present invention.
FIG. 11 is a schematic diagram illustrating an operation of a venting plate in FIG. 10.
FIG. 12 is a schematic diagram illustrating a battery pack according to yet another embodiment of the present invention.
FIG. 13 is a schematic diagram illustrating an operation of a venting plate in FIG. 12.
FIG. 14 is a schematic diagram illustrating a battery pack according to yet another embodiment of the present invention.
FIG. 15 is a schematic diagram illustrating a battery pack according to yet another embodiment of the present invention.

### (Description of reference numerals)

10: battery cell stack
100, 200: battery pack
110, 210: pack housing
111, 211: base plate
112, 212: side frame
113, 213: venting mechanism unit
114: venting cap
115: gas sealing member
B, B1, B2, B3: backflow prevention unit
120, 220: venting plate
121, 121': plate cutout portion
123, 123': plate cutout portion
125, 125': plate cutout portion
122: plate body portion
C: cutting line
130, 130', 130", 230: restriction member (blocking bracket)
131: peripheral frame
132: venting hole
133: blocking frame
H, H1, H2, H3: gas venting channel
I, I1, I2, I3: venting inlet
R: partition wall
O: venting outlet
M1to M6: battery module
214: center frame
215: side beam

### [Detailed Description of Exemplary Embodiments]

The present invention will become more apparent by describing exemplary embodiments of the present invention in detail with reference to the accompanying drawings. The embodiments described herein are exemplarily described to help the understanding of the invention, and it should be understood that the present invention can be implemented with various modifications different from the embodiments described herein. In addition, in order to help the understanding of the invention, the accompanying drawings are not illustrated to actual scale and dimensions of some components may be exaggerated.

### (First embodiment)

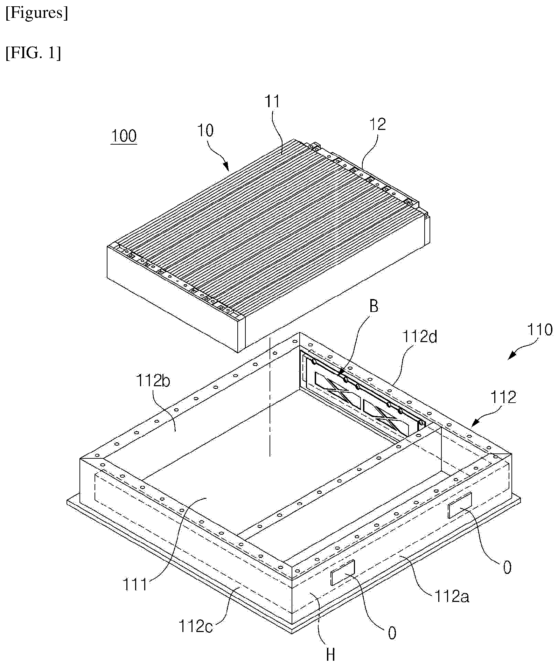

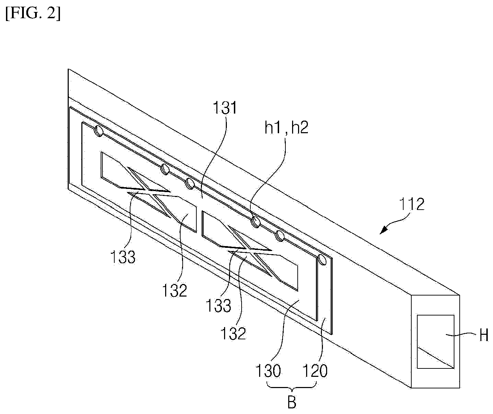

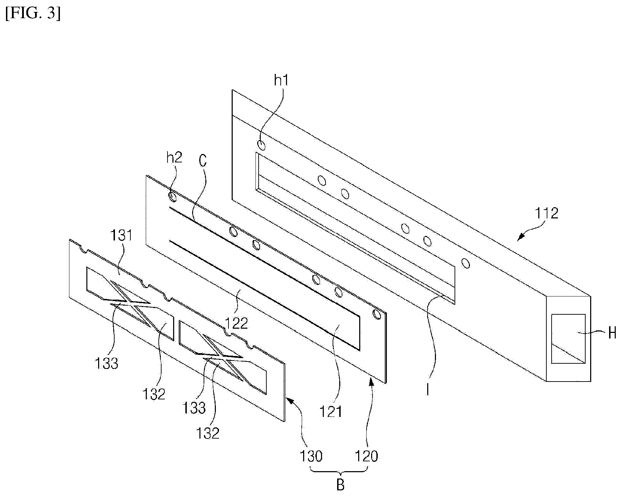

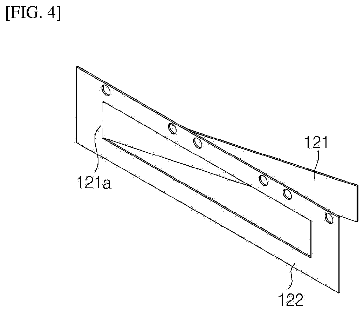

FIG. 1 is a perspective view illustrating a battery pack according to one embodiment of the present invention, FIG. 2 is a coupled perspective view of a backflow prevention unit according to the present disclosure, FIG. 3 is an exploded perspective view of the backflow prevention unit according to the present invention, and FIG. 4 is a schematic diagram illustrating an operation of a venting plate in FIG. 2.

Referring to FIGS. 1 to 4, a battery pack 100 of the present invention includes a plurality of battery cell stacks 10, a pack housing 110, a venting plate 120, and a restriction member 130.

A battery cell 11 is a secondary battery and may be a pouch-type secondary battery, a prismatic secondary battery, or a cylindrical secondary battery. Hereinafter, in the present embodiment, description of the battery cell will be made based on the pouch-type secondary battery.

The battery cell 11 is provided as a plurality of battery cells in the battery pack 100. The plurality of battery cells may be disposed by being stacked to be electrically connected. The battery pack 100 of the present invention may accommodate the plurality of battery cell stacks 10 as illustrated in FIG. 1, but may accommodate a plurality of battery modules as in other embodiments to be described below. The battery pack that accommodates the battery modules is a conventional battery pack that has been typically used. However, recently, a so-called cell to pack type battery pack in which a structure of the battery pack is simplified and the battery pack is composed of only battery cells without modules has been developed. The battery pack 100 in FIG. 1 is also intended to have a cell-to-pack structure and accommodates a plurality of battery cells 11 without modules. In order to obtain capacitance in a battery pack unit, a larger number of battery cells than the battery cells provided in the module may be disposed by being stacked in the battery pack 100. Alternatively, larger and higher capacity battery cells than typical battery cells may be disposed in the battery pack 100.

The pack housing 110 forms a space that accommodates the battery cell stack 10 and an electrical component assembly (not illustrated) therein. In addition, the pack housing 110 is a structure provided with a predetermined bracket to be coupled to a vehicle body.

Specifically, the pack housing 110 may include a base plate 111 on which the battery cells are seated, a side frame 112 formed along a perimeter of the base plate 111, and a pack cover (not illustrated) covering an upper portion of the battery cell and coupled to the side frame 112. As will be described below, a structure of the pack housing 110 accommodating the battery module is different from that of the present embodiment.

The side frame 112 specifically includes a front frame 112a, a rear frame 112b, a right frame 112c, and a left frame 112d, which are perpendicularly coupled along a perimetric edge of the base plate 111 to form a wall. In a specific pack housing 110, only the left and right frames 112c and 112d are referred to as the side frame 112. However, in the present invention, since a gas venting channel and a backflow prevention unit B, which will be described below, may be installed in all frames forming the wall of the pack housing 110, the front frame 112a and the rear frame 112b are also defined as the side frame 112.

The pack housing 110 may be assembled by welding and bolting the base plate 111 and the frames.

As illustrated in FIGS. 2 and 3, the side frame 112 is a hollow frame in which a gas venting channel H is formed. For example, the side frame 112 may be manufactured by extruding aluminum to form an empty space therein. By forming the hollow frames as described above, it is possible to reduce a weight of the pack housing 110. In addition, by forming a rib-shaped partition wall in the space, it is possible to maintain the mechanical rigidity of the frames at a reliable level. In addition, in this case, as will be described below, since the gas venting channel H may be formed as a plurality of gas venting channels inside the frame by the partition wall, it is possible to improve the gas discharge effect.

The side frame 112 includes a venting inlet I through which a venting gas flows into at least one position on the inner wall thereof facing the battery cell. The venting inlet I communicates with the gas venting channel H inside the side frame 112 so that the venting gas generated inside the pack may be discharged to the outside through the venting inlet I and the gas venting channel H.

The side frame 112 may be disposed along a perimeter of the battery cell, and the gas venting channel H may also be formed in the side frame 112 along the perimeter of the battery cell. Therefore, when the venting gas is generated in some of the battery cells, the venting gas entering the venting inlet I is discharged through the gas venting channel H with a long path along the side frame 112. In this process, incompletely combusted venting gas may be completely combusted, or the temperature and pressure of a high-temperature and high-pressure venting gas may be reduced. In other words, by extending a venting path, it is possible to stabilize an unstable state of the venting gas, thereby reducing the risk of accidents due to the venting gas.

It is preferable that the venting inlet I of the present invention be formed to have a predetermined length in a longitudinal direction of the side frame 112 so that a portion of the venting plate 120 to be described below may be inserted.

The present invention is provided with a predetermined backflow prevention unit B to prevent the high-temperature venting gas from being spreading to adjacent battery cells.

Referring to FIGS. 2 and 3, the backflow prevention unit B is installed above the venting inlet I. Since the gas venting channel H is narrow and formed inside the side frame 112, it is very difficult to install the backflow prevention unit on the passage of the gas venting channel H. For example, it is difficult to install the backflow prevention unit such as a check valve on the gas venting channel passage. In addition, in order to install the check valve on the passage, there is a difficulty in designing components included in the check valve to be smaller and more minutely. In the present invention, since the backflow prevention unit B is installed at the venting inlet I side formed in the inner wall of the side frame 112 exposed to the outside, the backflow prevention unit B may be easily mounted in the pack housing 110. In addition, since the backflow prevention unit B is formed to block the venting inlet I itself, it is possible to produce relatively larger components of the backflow prevention unit B, as will be described below, thereby facilitating production. In particular, when the check valve or the like is installed on the gas venting channel passage, it is possible to prevent a backflow of venting gas in a passage portion after the check valve, but there is a problem in that it is not possible to prevent the backflow of venting gas when the backflow occurs in a gas venting channel portion before the check valve, for example, between the battery cell and the check valve.

The present invention has an advantage in that the venting gas can be fundamentally blocked from spreading to another battery cell or battery module by installing the backflow prevention unit B at the venting inlet I itself.

Referring to FIGS. 2 and 3, the backflow prevention unit B of the present invention includes the venting plate 120 and the restriction member 130.

The venting plate 120 includes a plate cutout portion 121 surrounded by a figure-shaped cutting line C with one open side, and a plate body portion 122 surrounding the plate cutout portion 121.

One side 121a of the plate cutout portion 121 continues from the plate body portion 122 and is not formed with the cutting line C. Other sides of the plate cutout portion 121 are separated from the plate body portion 122 by the cutting line C. Therefore, the plate cutout portion 121, which is a plate portion surrounded by the cutting line C, may be moved toward the venting inlet I or an opposite side using the one side 121a as a support axis as illustrated in FIG. 4. For example, due to the pressure of the venting gas, the plate cutout portion 121 may perform a cantilever movement by moving toward the venting inlet I about the support axis. More specifically, elastic deformation in which one end portion of the plate cutout portion 121 is bent toward the venting inlet I or the opposite direction about the support axis is possible. In FIGS. 2 to 4, the cutting line C is formed in a U shape, and the plate cutout portion 121 is formed in a substantially rectangular shape with the one open side 121a. However, the shapes of the cutting line C and the plate cutout portion 121 are not limited thereto. When the one side is connected to the plate body portion 122, the cutting line C and the plate cutout portion 121 may have a triangular shape with one open side, a circular shape with one open side portion, an elliptical shape, or other polygonal shapes. However, since the plate cutout portion 121 functions to move into the venting inlet I and open the venting inlet I, a size thereof may be determined in consideration of a size of the venting inlet I. For example, as illustrated in FIG. 2, the venting inlet I may be formed to have a predetermined length in the longitudinal direction of the side frame 112. In other words, the venting inlet I may be formed to extend in an elliptical shape or a rectangular shape in order to efficiently discharge the venting gas. Therefore, the plate cutout portion 121 may also be formed enough long to correspond to the venting inlet I and sized to be inserted into the venting inlet I.

The venting inlet I is open in the inner wall of the side frame 112 to face the inside of the battery pack 100. In addition, since the venting inlet I communicates with the gas venting channel H, a communication space with a small length corresponding to a thickness of the inner wall of the side frame 112 is formed between the venting inlet I and the gas venting channel H. The plate cutout portion 121 may move into the communication space through the venting inlet I using the one side as the support axis. In other words, the communication space becomes a free space in which the plate cutout portion 121 may move between the venting inlet I and the gas venting channel H.

The venting plate 120 may be made of a material that may allow the plate cutout portion 121 to be elastically deformed about one side. However, the material should be a material capable of withstanding a high-temperature and high-pressure venting gas generated in the battery pack 100. For example, the venting plate 120 may be made of a metal material such as steel or stainless steel.

As illustrated in FIG. 3, the venting plate 120 covers the venting inlet I and is coupled to the inner wall of the side frame 112.

Specifically, in a state in which the plate cutout portion 121 is positioned above the venting inlet I, the plate body portion 122 is coupled to the inner wall of the side frame 112 around the venting inlet I. For coupling of the venting plate 120, as illustrated in FIG. 2, predetermined fastening holes h1 and h2 may be formed in the inner wall of the side frame 112 and an edge of the plate body portion 122 to couple the venting plate 120 to the venting inlet portion of the side frame 112 by a fastening member. Alternatively, the venting plate 120 may be coupled to the side frame 112 by another method such as welding, but the coupling method is not limited thereto. Since the plate body portion 122 around the plate cutout portion 121 functions to support the plate cutout portion 121 when the plate cutout portion 121 moves, the plate body portion 122 needs to be firmly coupled to the inner wall of the side frame 112.

Referring to FIG. 2, the restriction member 130 for restricting the movement of the plate cutout portion 121 is positioned on the inside of the venting plate 120, that is, on a side surface of the venting plate 120 opposite to the venting inlet I. The restriction member 130 is coupled to the venting plate 120 to cover at least the plate cutout portion 121.

The restriction member 130 may be a bracket-shaped member for blocking the movement of the plate cutout portion 121. In FIG. 2, a blocking bracket in the form of a quadrangular frame corresponding to the shapes of the venting inlet I and the plate cutout portion 121 is illustrated as the restriction member 130. The blocking bracket should block only the movement of the plate cutout portion 121 and allow the flow of venting gas. Therefore, a venting hole 132, which is a venting gas passage, is provided in a portion facing the plate cutout portion 121 of the blocking bracket. In addition, a blocking frame 133 for blocking the movement of the plate cutout portion 121 is installed at substantially a center portion of the blocking bracket, which is a portion facing the venting hole 132. In other words, the blocking bracket of the embodiment restricts the movement of the venting plate 120 by a quadrangular peripheral frame 131 and the blocking frame 133 near the venting hole 132.

A size and a shape of the blocking bracket may be appropriately determined in consideration of a coupling area with the venting plate 120, the ease of blocking the plate cutout portion 121, and the like. In addition, sizes, positions, and the number of venting holes 132 of the blocking bracket, a shape and a position of the blocking frame 133, and a size and a shape of the peripheral frame 131 may also be appropriately changed in consideration of the ease of blocking the plate cutout portion 121 and the like.

A material such as a metal or plastic resin capable of withstanding a high-temperature and high-pressure venting gas may be adopted as a material of the blocking bracket. As illustrated in FIG. 3, the peripheral frame 131 of the blocking bracket may be coupled to the venting plate body portion 122. In this case, the peripheral portion (peripheral frame 131) of the blocking bracket and the plate body portion 122 may be fastened together to the inner wall of the side frame 112 around the venting inlet I by the fastening member. Therefore, the installation work of the backflow prevention unit B may be easily performed by a single fastening operation. In addition, since the peripheral frame 131 of the blocking bracket is firmly fastened to the inner wall of the side frame 112 along with the plate body portion 122, the plate cutout portion 121 may be stably and elastically deformed while supported by this fastened portion.

A battery cell or battery module may be positioned inside the blocking bracket, and when abnormally high heat occurs, a venting gas may be generated by the cell or the module and discharged toward the blocking bracket.

The backflow prevention unit B including the venting plate 120 and the restriction member 130 (blocking bracket) may be installed at one or more positions on the inner wall thereof facing the battery cell or battery module. **In** addition, in order to efficiently discharge the gas, the venting inlet I may be at least formed in the inner walls of the side frame 112 at both sides of the battery cell or battery module, and in this case, the venting plate 120 and the restriction member 130 may be installed above each of the venting inlets (see FIG. 1). When the venting inlets I are formed on both of the side frames 112, the venting gas generated at both sides of the battery pack 100 may be discharged simultaneously, and thus the venting gas may be discharged quickly. In addition, it is possible to prevent the venting gas from being unevenly discharged through the venting inlet I at one side, thereby maintaining a well-balanced internal pressure in the battery pack 100. When the venting inlets I are formed on both of the side frames 112, the venting plate 120 and the restriction member 130 are installed above both of the venting inlets I to prevent the backflow of gas.

In addition, since the high-temperature venting gas is easily generated by a terminal portion 12 of the battery cell or a terminal portion of the battery module, it is preferable that the venting inlet I and the backflow prevention unit B be installed on the inner wall of the side frame 112 facing the terminal portion 12 of the battery cell or the terminal portion of the battery module.

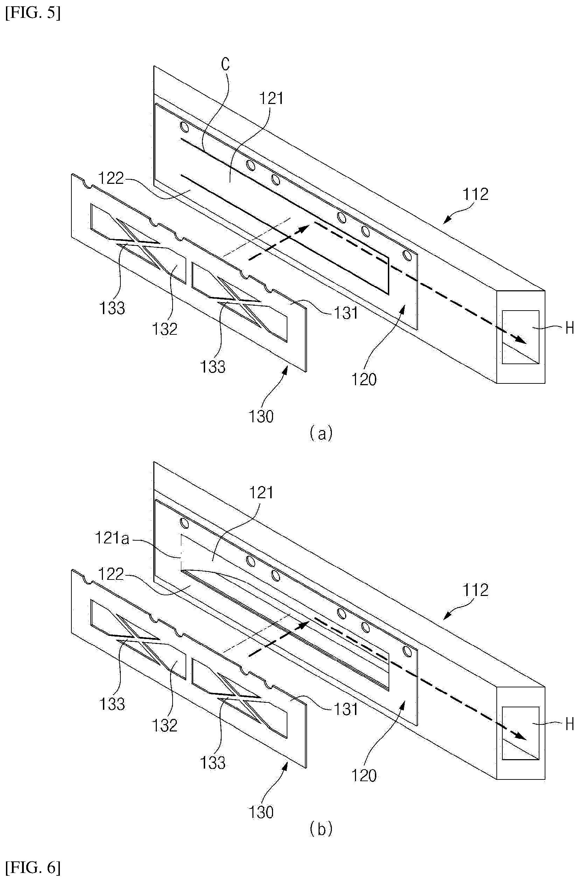

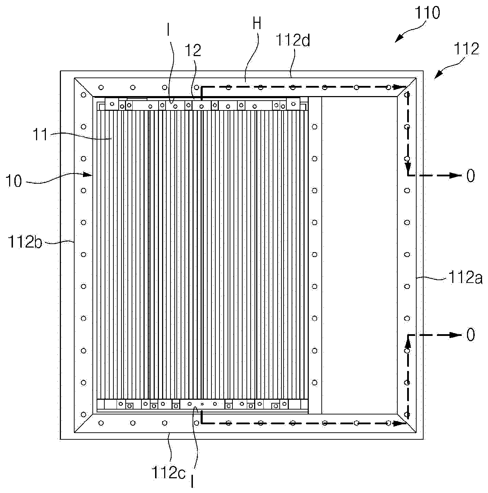

FIG. 5 is a schematic diagram illustrating an operating state of the backflow prevention unit B of the present disclosure, and FIG. 6 is a schematic diagram illustrating a path through which the venting gas is discharged according to the embodiment.

As illustrated in FIG. 1, a venting outlet O communicating with the gas venting channel H is formed in an outer wall of the side frame 112. The gas venting path through the side frame 112 may vary depending on positions of the venting inlet I and the venting outlet O. By moving the venting outlet O further from the venting inlet I, the gas venting path may be lengthened. Preferably, as illustrated in FIGS. 1 and 6, when the venting outlet O is formed in the inner wall of the side frame 112a disposed perpendicular to the side frames 112c and 112d on which the venting inlet I is formed, a long gas venting path continuing from a horizontal direction to a perpendicular direction may be obtained.

The operation of the backflow prevention unit B according to the present invention will be described with reference to FIGS. 1, 4, 5, and 6.

In a normal operating state of the battery pack 100 in which thermal runaway does not occur, since the venting inlet I is covered by the venting plate 120, almost no venting gas is discharged through the venting inlet I and the gas venting channel H communicating with the venting inlet I. For example, when the pressure of the venting gas is not large enough to move the plate cutout portion 121, a small amount of venting gas moves to the gas venting channel H through the cutting line C of the venting plate 120, that is, through a narrow gap between the plate body portion 122 and the plate cutout portion 121. In this case, an amount of discharged venting gas varies depending on a size of the cutting line C. A width and length of the cutting line C may be set to levels that do not interfere with the movement of the plate cutout portion 121. For example, when the width of the cutting line C is large, the plate cutout portion 121 may be easily moved. In addition, when the width and length of the cutting line C are large, a larger amount of venting gas may be delivered to the gas venting channel H.

When the venting outlet O is not blocked, it is possible to prevent an increase in pressure in the battery pack 100 when a small amount of venting gas is gradually discharged to the outside. In this case, the cutting line C of the venting plate 120 functions as a venting hole that discharges the venting gas in the pack.

Meanwhile, when an abnormally high temperature phenomenon occurs in the battery cell or battery module such that a large amount of venting gas is generated and the pressure of the venting gas becomes a predetermined design pressure or higher at which the plate cutout portion 121 may be moved, the venting plate 120 is deformed. In other words, as illustrated in FIGS. 4 and 5, the plate cutout portion 121 moves into the venting inlet I using the one side 121a, which is a portion connected to the venting plate 120, as a support axis. In this case, the plate cutout portion 121 is elastically deformed so that the end portion of the plate cutout portion 121 opposite to the one side 121a faces the venting inlet I. As the plate cutout portion 121 covering the venting inlet I moves into the venting inlet I, the venting inlet I is reliably opened. Therefore, a large amount of venting gas may move to the gas venting channel H through the venting inlet I. In FIG. 5B, it is clearly shown that the plate cutout portion 121 moves toward the venting inlet I using the one side as the support axis. Referring to FIG. 3, a stepped portion as much as a thickness of the inner wall of the side frame 112 is formed between a surface of the venting inlet I and the gas venting channel H. Therefore, the one side 121a of the plate cutout portion 121 connected to the plate body portion 122 and a portion adjacent thereto may be gently bent by being pressed against the stepped portion when the plate cutout portion 121 moves.

As illustrated in FIG. 6, the venting gas moves to the venting outlet O formed in the outer wall of the side frame 112 through the gas venting channel H formed in the side frame 112 and is discharged from the venting outlet O to the outside of the battery pack 100. Therefore, by decreasing an increase in pressure per unit time in the battery pack 100, it is possible to prevent thermal runaway from continuously occurring in the battery pack 100. In addition, since flames in addition to the venting gas may be discharged through the venting path, it is possible to prevent the flames from spreading to another battery cell and module in addition to the battery cell or module in which thermal runaway occurs.

In this case, as illustrated in FIG. 5, the plate cutout portion 121 of the venting plate 120 may move toward the venting inlet I, but a reverse movement is blocked by the blocking bracket. For example, when the pressure outside the battery pack 100 is higher than the pressure inside the pack for some reason, the plate cutout portion 121 receives pressure in a direction from the gas venting channel H side toward the venting inlet I. Alternatively, when the pressure of the gas venting channel H at one side is higher than the pressure of the gas venting channel H at the other side, the pressure of the venting gas is applied to the venting inlet I connected to the gas venting channel H at the other side. The plate cutout portion 121 is separated from the plate body portion 122 by the cutting line C. Therefore, in this case, the plate cutout portion 121 tries to make a cantilever movement by moving toward the inside of the battery pack 100, that is, the blocking bracket, about the one side 121a due to the pressure of the venting gas. However, since the blocking bracket covers the plate cutout portion 121 and is fixed to the plate body portion 122 and the inner wall of the side frame 112, the movement of the plate cutout portion 121 in a direction opposite to the venting inlet I is fundamentally blocked. Therefore, it is possible to reliably prevent the venting gas from flowing back into the battery pack 100 from the gas venting channel H through the venting inlet I. The blocking bracket includes the peripheral frame 131 coupled to the plate body portion 122 and the blocking frame 133 extending in a direction crossing the peripheral frame 131, and the plate cutout portion 121 may not move into the battery pack 100 due to the blocking frame 133. However, since the blocking bracket includes the venting hole 132 (venting space) between the blocking frame 133 and the peripheral frame 131, one-way movement that allows the venting gas in the battery pack 100 to flow toward the venting inlet I is allowed.

As described above, since the battery pack 100 according to the present invention may discharge the venting gas to the outside, it is possible to prevent an increase in pressure inside the pack, effectively block the serial occurrence of thermal runaway, and prevent the backflow of venting gas into the pack by the venting plate 120 and the restriction member 130 (blocking bracket), thereby preventing the high-temperature venting gas from spreading to an adjacent battery cell or battery module. Therefore, it is possible to further strengthen the safety of the battery pack 100 of the present invention.

**In** addition, as illustrated in FIG. 6, the venting inlet I and the gas venting channel H may be formed in the side frames 112c and 112d installed in the horizontal direction, and when the gas venting channel and the venting outlet O communicating with the gas venting channel H are formed in the side frames 112a and 112b disposed perpendicular to the side frame 112 on which the venting inlet I is formed, the venting gas may be discharged through a longer path. Therefore, it is possible to block the high-temperature venting gas from being immediately discharged to the outside of the pack, thereby increasing safety. In particular, as the high-temperature and high-pressure venting gas moves through the long path, the temperature and pressure thereof may be decreased, thereby further improving the safety at the venting outlet O.

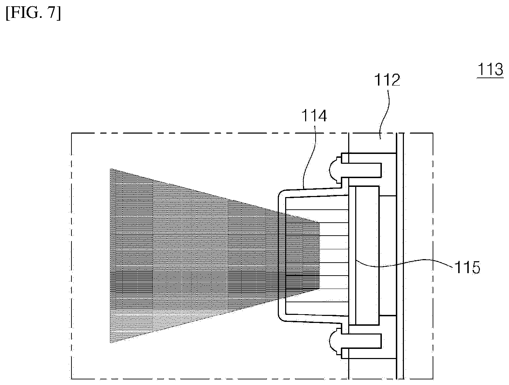

FIG. 7 is a view illustrating an example of a venting mechanism unit 113 provided at the venting outlet O of the battery pack of the present invention.

The venting mechanism unit 113 includes a venting cap 114 for preventing the venting gas from leaking out of the venting outlet O. The venting cap 114 covers the venting outlet O and extends outward by a predetermined length to form a path that guides the venting gas to the outside. Therefore, the venting path may be extended as much as the length of the venting cap 114.

A gas sealing member 115 may be installed in the venting outlet O or the venting cap 114. The gas sealing member 115 may be, for example, a sheet-shaped member. The gas sealing member 115 may be deformed at a predetermined pressure and/or temperature or higher to open the venting outlet O to the outside. For example, the gas sealing member 115 may be a rupture sheet configured to be ruptured when the pressure of the venting gas is a predetermined pressure or higher. Alternatively, the sheet member may open the venting outlet O while melting at a predetermined temperature or higher. To this end, the sheet member may be made of a film or foam material that is vulnerable to high temperatures.

When the venting cap 114 and the gas sealing member 115 are installed at the venting outlet O, even when a small amount of venting gas is generated in the battery pack, the venting gas is not discharged to the outside, and thus it is possible to increase the safety of the battery pack 100. In addition, by maintaining airtightness in the battery pack 100, it is possible to strengthen the operational stability of the battery pack 100. In this case, it is possible to prevent a small amount of venting gas that has moved to the venting inlet I through the cutting line C of the venting plate 120 from being discharged to the outside of the battery pack 100 by the gas sealing member 115. However, in reality, since it is difficult to maintain complete airtightness in the battery pack 100, a very small amount of venting gas may be discharged to the outside of the pack through minute gaps of the pack housing 110 other than the gas sealing member 115.

In the case of the battery pack 100 including the venting cap 114 and the gas sealing member 115 in FIG. 7, when an abnormally high temperature phenomenon occurs in the battery cell or battery module such that a large amount of venting gas is generated and the pressure inside the pack exceeds a set rupture pressure of the gas sealing member 115, the gas sealing member 115 is ruptured to open the venting outlet O. Alternatively, when the high-temperature venting gas exceeding a heat resistance limit of the gas sealing member 115 is discharged, the gas sealing member 115 may melt to open the venting outlet O.

In this case, due to the pressure of the venting gas, the plate cutout portion 121 moves into the venting inlet I using one side thereof, which is a portion connected to the venting plate 120, as a support axis. Therefore, the venting inlet I is reliably opened so that a large amount of venting gas moves to the gas venting channel H through the venting inlet I and is discharged to the outside of the battery pack 100 through the open venting outlet O.

Therefore, by decreasing an increase in pressure per unit time in the battery pack 100, it is possible to prevent thermal runaway from serially occurring in the battery pack 100. In addition, since flames in addition to the venting gas may be discharged through the venting path, it is possible to prevent the flames from spreading to another battery cell and module.

In this case, the plate cutout portion 121 of the venting plate 120 may move toward the venting inlet I, but a reverse movement is blocked by the blocking bracket. In other words, the plate cutout portion 121 is fundamentally blocked from moving in a direction opposite to the venting inlet I by the blocking bracket. Therefore, it is possible to reliably prevent the venting gas from flowing back into the battery pack 100 from the gas venting channel H through the venting inlet I. In particular, according to the present invention, it is possible to further increase safety in a case in which the gas sealing member 115 does not rupture even when reaching a set pressure or temperature. For example, when the gas sealing member 115 does not rupture even when exceeding the set pressure or temperature, the venting gas is not discharged through the venting outlet O. In this case, the pressure of the venting gas in the gas venting channel H increases and becomes greater than an internal pressure of the battery pack 100. Therefore, the venting gas in the gas venting channel H tries to flow back by receiving pressure toward the inside of the battery pack 100. When there is no gas backflow prevention unit of the present invention, the venting gas may flow into the battery pack 100 and may instantly spread to the battery cell or battery module in which thermal runaway does not occur, causing serial explosions. However, according to the present invention, since the backflow of venting gas can be prevented by including the venting plate 120 and the restriction member 130, it is possible to prevent or delay the serial explosions. In addition, when the pressure or temperature of the gas venting channel H further increases while the backflow of venting gas is prevented, the gas sealing member 115 may rupture. **In** other words, the inside of the battery pack 100 can be protected by the backflow prevention unit until the gas sealing member 115 ruptures and furthermore, it is possible to secure a time until the gas sealing member 115 ruptures. Therefore, it is possible to secure a temporal margin for operation of the gas sealing member, thereby improving the venting reliability of the battery pack 100.

### (Second embodiment)

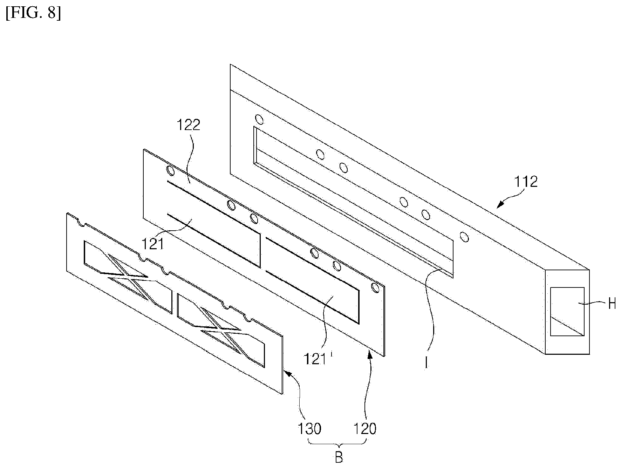

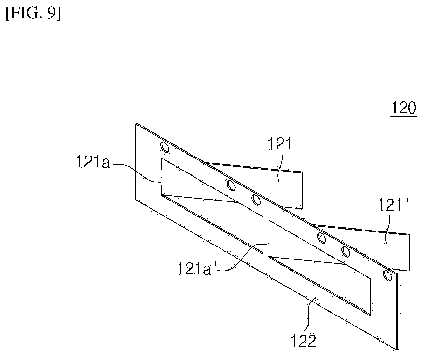

FIG. 8 is a schematic diagram illustrating a battery pack according to another embodiment of the present invention, and FIG. 9 is a schematic diagram illustrating an operation of the venting plate 120 in FIG. 8.

The venting plate 120 of the battery pack illustrated in FIGS. 2 to 5 includes one plate cutout portion 121 in the plate body portion 122. **In** the embodiment, the venting plate 120 includes a pair of plate cutout portions 121 and 121' in the plate body portion 122. **In** other words, in the embodiment, the cutting line C with one open side is formed on each of left and right sides of the plate body portion 122, and the pair of plate cutout portions 121 and 121' are provided so that the plate cutout portions 121 and 121' surrounded by the cutting lines C are arranged in a line. **In** the example, a length of one plate cutout portion is smaller than that of the example in FIG. 4. Since the plate cutout portions 121 and 121' with small lengths are easily and elastically deformed, the cantilever movement is possible even with a smaller gas pressure, making it easier to open the venting inlet I during venting. **In** addition, since the pair of plate cutout portions 121 and 121' move into the venting inlet I together, the pressure of the venting gas may be uniformly distributed to each of spaces formed by the movement of the pair of plate cutout portions 121 and 121'. In addition, since the pair of plate cutout portions 121 and 121' move to form open spaces, areas of the open spaces to the venting inlet I may be greater than that of the venting plate 120 in FIG. 3. Therefore, a larger amount of venting gas may be guided to the venting inlet I.

### (Third embodiment)

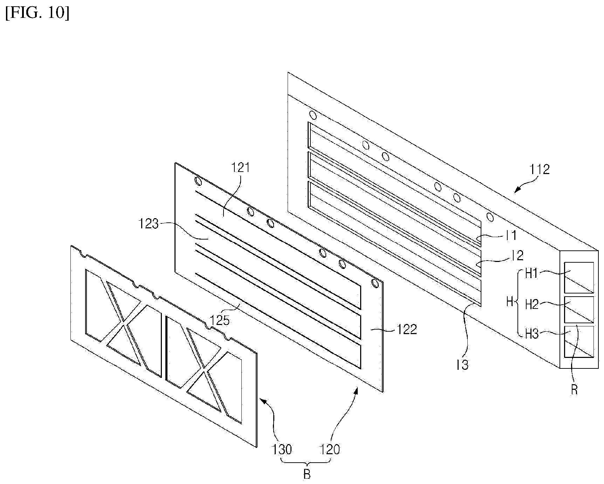

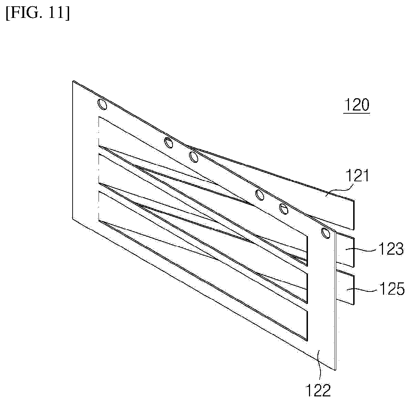

FIG. 10 is a schematic diagram illustrating a battery pack according to still another embodiment of the present invention, and FIG. 11 is a schematic diagram illustrating an operation of the venting plate 120 in FIG. 10.

In the embodiment, a plurality of gas venting channels H of the side frame 112 provided in the pack housing 110 are formed in a height direction. In other words, the plurality of gas venting channels H are formed at predetermined intervals in the height direction of the side frame 112. In the illustrated embodiment, three gas venting channels H1, H2, and H3 are formed at predetermined intervals in the height direction, but two, four, or four or more gas venting channels H may be formed. In theory, the required number of gas venting channels H in the height direction may be formed in a range allowed by a height of the side wall of the battery pack.

For example, when the side frame 112 is manufactured by extrusion processing, one internal space or a plurality of internal spaces may be formed in a proceeding direction of an extruded member, and the internal spaces may become the gas venting channels H. As illustrated in FIGS. 2 and 3, when one large hollow is formed in the side frame 112 and this becomes the gas venting channel H, a discharge amount of venting gas may be increased, but the mechanical rigidity of the side frame 112 may be insufficient.

On the other hand, as illustrated in FIG. 10, when a rib-shaped partition wall R is formed in the hollow space, a weight of the pack housing 110 may be reduced while the mechanical rigidity of the side frame 112 is increased. In addition, by forming the plurality of gas venting channels H1, H2, and H3 in the height direction, when a gas is generated in a specific portion in the height direction of the battery cell or battery module, the venting gas may be appropriately guided to the gas venting channel H according to a position thereof.

In this case, three venting inlets are formed in the inner wall of the side frame 112 to correspond to the gas venting channels H1, H2, and H3, respectively. Referring to FIG. 10, it can be seen that three venting inlets I1, I2, and I3 are formed in the inner wall of the side frame 112 in the height direction, and the venting inlets I1, I2, and I3 communicate with the gas venting channels H1, H2, and H3, respectively. In this case, in order to move the venting gas to each of the venting inlets I1, I2, and I3 and prevent the venting gas from flowing back into the battery, the venting plate 120 and the restriction member 130 may be installed above each of the venting inlets I1, I2, and I3 of the inner wall of the side frame 112. In other words, three backflow prevention units B of the present invention may be installed to correspond to the number of venting inlets I1, I2, and I3 and the number of gas venting channels H1, H2, and H3.

However, in the embodiment of FIG. 10, a configuration of a device is simplified by installing only one backflow prevention unit B covering the venting inlet I. In other words, only one venting plate 120 and one blocking bracket 130 constituting the backflow prevention unit B are installed above each of the venting inlet I and the gas venting channel H to reduce device manufacture costs. Instead, in order to open and close each of the venting inlets I, a plurality of plate cutout portions installed in the venting plate 120 are formed to correspond to the number of venting inlets I. Referring to FIGS. 10 and 11, the venting plate 120 includes one plate body portion 122, and three plate cutout portions 121, 123, and 125 at predetermined intervals in the height direction to correspond to the number of gas venting channels H1, H2, and H3, and the number of venting inlets I1, I2, and I3. In other words, three figure-shaped cutting lines C with one open side are provided on the plate body portion 122 in the height direction. Therefore, three plate cutout portions 121, 123, and 125 surrounded by the cutting lines C are provided.

In a state in which each of the plate cutout portions 121, 123, and 125 is positioned above each of the venting inlets I1, I2, and I3, the plate body portion 122 covers the entire periphery of each of the venting inlet I of the inner wall of the side frame 112 and is coupled to the side frame 112.

In addition, only one blocking bracket, which is the restriction member 130, may be provided, and one blocking bracket may cover all of the three plate cutout portions 121, 123, and 125 and be coupled to the venting plate 120.

In the embodiment, a small amount of venting gas may flow out into the gas venting channels H1, H2, and H3 through the three cutting lines C. When a large amount of venting gas is generated and the pressure is higher than or equal to a set pressure, as illustrated in FIG. 11, the three plate cutout portions 121, 123, and 125 may move into the respectively corresponding venting inlets I1, I2, and I3 to guide a large amount of venting gas to each of the gas venting channels H1, H2, and H3. In this case, each of the plate cutout portions 121, 123, and 125 may open each of the venting inlets I1, I2, and I3 in the height direction, and the venting gas may move to each of the gas venting channels H1, H2, and H3 respectively connected to the venting inlets I1, I2, and I3, and finally, the venting gas may be discharged to the venting outlet O formed in the outer wall of the side frame 112.

### (Fourth embodiment)

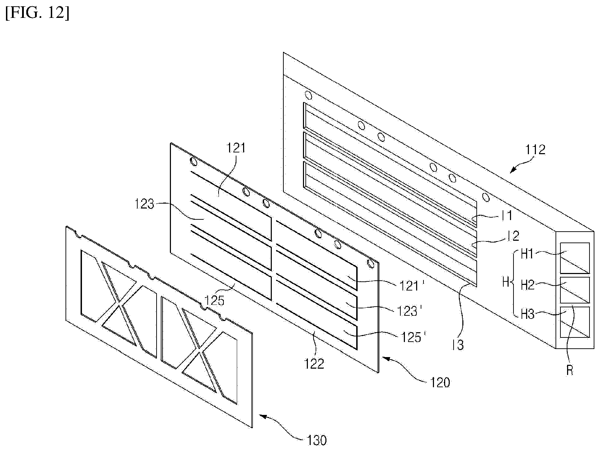

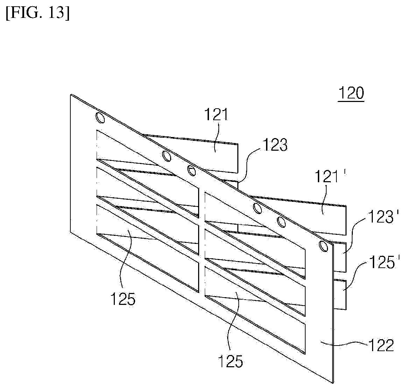

FIG. 12 is a schematic diagram illustrating a battery pack according to yet another embodiment of the present invention, and FIG. 13 is a schematic diagram illustrating an operation of a venting plate in FIG. 12.

As illustrated in FIG. 9, the venting plate 120 in the embodiment has the pair of plate cutout portions 121 formed at left and right sides of the plate body portion 122. In addition, as illustrated in FIGS. 10 and 11, the venting plate 120 has three plate cutout portions at predetermined intervals in the height direction to correspond to the gas venting channels H. Therefore, in the embodiment, three pairs of plate cutout portions 121, 121', 123, 123', and 125, 125' are provided in the height direction.

Since the venting plate 120 may have the plate cutout portion with a smaller length like the venting plate 120 in FIG. 9, elastic deformation can be made more easily. In addition, as the number of plate cutout portions increases, as illustrated in FIG. 13, the open area to each venting inlet I increases, and thus a large amount of venting gas may be more easily discharged to the gas venting channel H.

### (Fifth embodiment)

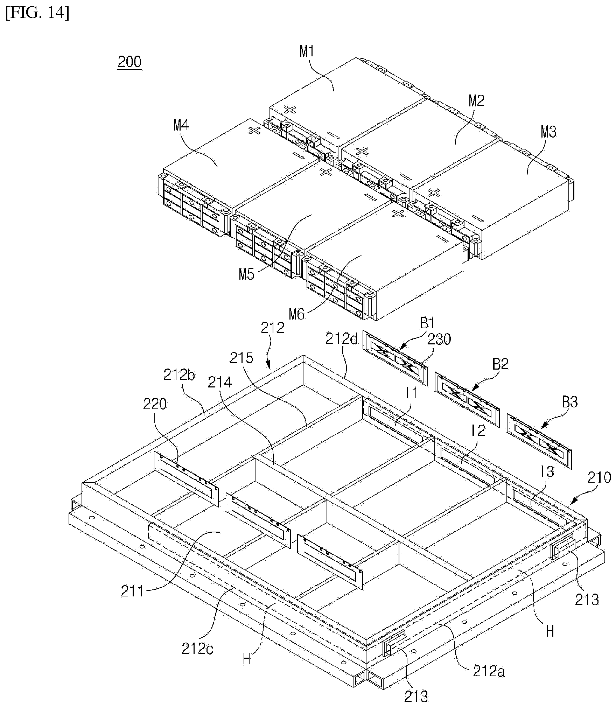

FIG. 14 is a schematic diagram illustrating a battery pack according to yet another embodiment of the present invention.

The embodiment relates to a battery pack 200 in which a plurality of battery modules are accommodated in a pack housing.

As illustrated, a plurality of battery modules, for example, six battery modules M1 to M6 are accommodated on a base plate 211 of a pack housing 210, and a side frame 212 surrounds the six battery modules M1 to M6 and is coupled along an edge of the base plate 211 to form the pack housing 210.

A plurality of battery cells may be accommodated in a module case of the battery module. To this end, an accommodation space for accommodating a plurality of battery cells may be provided in the module case. The battery pack includes a plurality of battery modules, an electrical component assembly (not illustrated), and a pack housing.

The electrical component assembly may accommodate a relay device, a current sensor, a fuse, a battery management system (BMS), a manual service disconnector (MSD), and the like. The electrical component assembly may be packaged together with the battery modules in the pack housing so as not to be exposed to the outside.

The pack housing 210 in FIG. 14 has a somewhat different shape from the pack housing in FIG. 1 to accommodate the plurality of battery modules. In other words, the pack housing 210 in FIG. 14 includes a center frame 214 and partition walls (side beams 215) to partition and install the battery modules between the center frame 214 and the side frame 212, which are installed on the base plate 211. The side frame 212 is installed on the base plate 211 along the perimeters of the battery modules. In addition, a pack cover (not illustrated) covers the battery module and is installed on an upper portion of the side frame 212. In other words, the pack cover, the side frame 212, the base plate 211, the center frame 214, and the side beam 215 constitute the pack housing 210 that accommodates the modules.

The side frame 212 has the hollow gas venting channel H therein. As illustrated in FIG. 14, when one gas venting channel H is formed along the side frame 212, each of the venting inlets I1, I2, and I3 communicating with the one gas venting channel H may be formed for each battery module. In addition, the venting outlet O communicating with the gas venting channel H or a venting mechanism unit 213 as illustrated in FIG. 7 may be formed in an outer wall of one side of the side frame 212.

A venting plate 220 and a blocking bracket 230 according to the present invention are installed above each of the venting inlets I. In this case, as illustrated in FIG. 14, it is preferable that the venting inlet I and the backflow prevention units B1, B2, and B3 be installed on each of the inner walls of the side frames 212c and 212d at both sides of the battery module. Therefore, the venting gas may be discharged from the battery modules disposed at both sides inside the battery pack to the venting inlets I1, I2, and I3 in a balanced manner. In addition, the venting gas may move from both of the side frames 212c and 212d toward a front frame (front side frame 212a) disposed perpendicular thereto in a balanced manner.

In addition, it is preferable that venting inlets I1, I2, and I3 and the backflow prevention units B1, B2, and B3 are installed on the inner wall of the side frame 112 at the side at which the terminal portion of the battery module is formed. Since the venting gas is easily generated by the terminal portion of the module, when the venting inlets I1, I2, and I3 are formed in the inner wall of the side frame 112 facing the terminal portion of the module, the venting gas may be more easily discharged to the outside.

Even in the embodiment, each of the backflow prevention units B1, B2, and B3 installed above each of the venting inlets I1, I2, and I3 can prevent the venting gas from flowing back to the battery module while allowing the venting gas to be discharged to the venting inlets I1, I2, and I3 in one direction.

Therefore, even when the pressure of the venting gas discharged from a specific battery module is high, the backflow prevention units B1, B2, and B3 can prevent the venting gas from flowing back into another adjacent battery module.

### (Sixth embodiment)

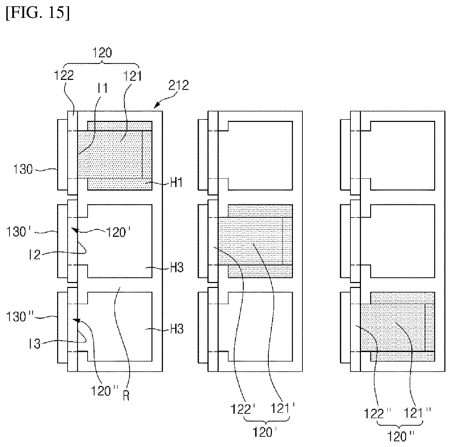

FIG. 15 is a schematic diagram illustrating a battery pack according to yet another embodiment of the present invention.

In the embodiment, as illustrated in FIG. 12, a plurality of gas venting channels H1, H2, and H3 are provided in a height direction of the side frame 212. When an internal space of the side frame 212 is partitioned by a partition wall R such as a rib, the internal space may be partitioned into the plurality of gas venting channels H1, H2, and H3. In addition, it is possible to maintain the mechanical rigidity of the side frame 212 by the rigidity of the rib.

In this case, each of the gas venting channels H1, H2, and H3 positioned in the height direction may be allocated as a dedicated gas venting channel for gas venting of each battery module.

In other words, as illustrated in FIG. 15, the venting inlet I1 may be formed on an uppermost end of the inner wall of the side frame 212 facing the battery module M1 so that the uppermost gas venting channel H1 among the three gas venting channels H1, H2, and H3 in the height direction communicates with the battery module M1. In addition, the venting inlet I2 may be formed on a middle portion of the inner wall of the side frame 212 facing the battery module M2 so that the middle gas venting channel H2 communicates with the battery module M2. In addition, the venting inlet I3 may be formed on a lowermost end of the inner wall of the side frame 212 facing the battery module M3 so that the lowermost gas venting channel H3 communicates with the battery module M3. Therefore, it is possible to prevent the high-temperature venting gas from flowing between adjacent battery modules in the battery pack and efficiently discharge the venting gas generated from each battery module quickly to each of the venting inlets I1, I2, and I3. In addition, since dedicated gas venting channels H1, H2, and H3 are formed for each module, it is difficult for the venting gas generated from one module to flow into gas venting channels H1, H2, and H3 of another module from the positions of the venting inlets I1, I2, and I3. Therefore, it is possible to further reduce the backflow phenomenon of the venting gas caused by pressure interference between the gas venting channels.

In addition, the venting plate 120 and the blocking bracket 130 may be installed at each of the venting inlets I1, I2, and I3 arranged in the height direction of each of the gas venting channels. Therefore, in the embodiment, it is possible to further increase the safety of the battery pack by the dedicated gas venting channels H1, H2, and H3 and backflow prevention unit B.

In other words, the dedicated venting plate 120 and blocking bracket 130 may be installed at the venting inlet I1 of the uppermost gas venting channel H1 communicating with the battery module M1 among the three gas venting channels H1, H2, and H3. In addition, a separate dedicated venting plate 120' and blocking bracket 130' may be installed at the venting inlet I2 of the middle gas venting channel H2. Next, a separate dedicated venting plate 120" and blocking bracket 130" may be installed at the venting inlet I3 communicating with the lowermost gas venting channel H3. Therefore, when the venting gas is generated, the plate cutout portions 121, 121', and 121" may move into the venting inlets I1, I2, and I3 from plate body portions 122, 122', and 122" of the venting plates 120, 120', and 120" to discharge the venting gas to each of the gas venting channels H1, H2, and H3.

Meanwhile, three gas venting channels H1, H2, and H3 may be formed on the side frame 212 facing M4, M5, and M6 disposed opposite to M1, M2, and M3 in the height direction in the same manner. In addition, a venting inlet communicating with each of the battery modules and a gas venting channel H may be formed on the facing inner wall of the side frame 212, and a venting plate and a blocking bracket may be installed above each of the venting inlets.

Therefore, it is possible to efficiently discharge the venting gas from each of the battery modules to each of the gas venting channel allocated for each module and prevent the backflow of gas from the gas venting channel to each of the battery modules.

Meanwhile, when the plurality of gas venting channels H1, H2, and H3 are formed in each side frame 212 in the height direction, the venting gas of each gas venting channel may converge and be discharged at an outlet end of each of the gas venting channels, that is, the venting outlet O formed in the outer wall of the side frame 212. To this end, the side frame 212 may be formed so that the plurality of gas venting channels are close to each other around the venting outlet O.

The number of venting outlets O may also be determined to correspond to the positions at which the venting inlets I are formed. For example, as illustrated in FIGS. 1, 6, and 14, when the venting inlet I is formed on each of the inner walls of the side frames 112c, 112d and 212c, 212d disposed at both left and right sides of the battery cell or battery module, the venting outlets O may be formed to correspond to two positions at both left and right sides of the outer walls of the side frames 112a and 212a disposed perpendicular to the venting inlets I. Therefore, the venting gas may be discharged to both sides of the battery pack in a balanced manner.

According to various embodiments described above, it is possible to provide a power storage device (not separately illustrated) including the battery pack that improves safety by efficiently discharging the venting gas and preventing the backflow of venting gas.

In addition, according to one embodiment of the present invention, it is possible to provide a vehicle (not separately illustrated) including the battery pack that improves safety by efficiently discharging the venting gas and preventing the backflow of venting gas.

The scope of the present invention should be construed by the appended claims.

Meanwhile, in the specification, terms indicating directions such as "top," "bottom," "left," "right," "front," and "rear" have been used, but it is apparent that these terms are only for convenience of description and may vary depending on a position of a target object, a position of an observer, or the like.

## Claims

1. A battery pack (100, 200) in which a plurality of battery cells (11) or a plurality of battery modules (M1-M6) are accommodated, comprising:
a pack housing (110, 210) including a side frame (112, 212) in which a gas venting channel (H, H1, H2, H3) is formed and of which an inner wall facing the battery cell (11) or battery module (M1-M6) is provided with a venting inlet (I, I1, I2, I3) communicating with the gas venting channel (H, H1, H2, H3) at at least one position of the inner wall; and
a venting plate (120, 220) including a plate cutout portion (121, 123, 125) surrounded by a figure-shaped cutting line (C) with one open side (121a) and a plate body portion (122) surrounding the plate cutout portion (121), covering the venting inlet (I, I1, I2, I3), and coupled to the inner wall of the side frame (112, 212);
wherein the plate cutout portion (121, 123, 125) is movable into the venting inlet (I, I1, I2, I3) using one side (121a) thereof connected to the plate body portion (122) as a support axis,
**characterized in that** the battery pack further comprises a restriction member (130, 130', 130", 230) covering the plate cutout portion (121, 123, 125) and coupled to the venting plate (120, 220) inside the venting plate (120, 220) opposite to the venting inlet (I, I1, I2, I3),
wherein the restriction member (130, 130', 130", 230) is configured to allow a venting gas generated in the pack housing (110, 210) to flow toward the venting inlet (I, I1, I2, I3),
wherein movement of the plate cutout portion (121, 123, 125) in a direction opposite to the venting inlet (I, I1, I2, I3) is blocked by the restriction member (130, 130', 130", 230).

2. The battery pack (100, 200) of claim 1, wherein the gas venting channel (H, H1, H2, H3) is formed in the side frame (112, 212) along a perimeter of the battery cell (11) or battery module (M1-M6).

3. The battery pack (100, 200) of claim 1, wherein the venting inlet (I, I1, I2, I3) is formed in an inner wall of each of the side frames (112, 212) at two opposite sides of the battery cell (11) or battery module, (M1-M6) and
the venting plate (120, 220) and the restriction member (130, 130', 130", 230) are installed over each of the venting inlets (I, I1, I2, I3).

4. The battery pack (100, 200) of claim 1, wherein the venting inlet (I, I1, I2, I3) is formed in the inner wall of the side frame (112, 212) facing a terminal portion (12) of the battery cell (11) or a terminal portion of the battery module (M1-M6), and
the venting plate (120, 220) and the restriction member (130, 130', 130", 230) are installed over the venting inlet (I, I1, I2, I3).

5. The battery pack (100, 200) of claim 1, wherein the venting inlet (I, I1, I2, I3) is formed to have a predetermined length in a longitudinal direction of the side frame (112, 212), and the plate cutout portion (121, 123, 125) is sized to be capable of being inserted into the venting inlet (I, I1, I2, I3).

6. The battery pack (100, 200) of claim 1, wherein in a state in which the plate cutout portion (121, 123, 125) is positioned over the venting inlet (I, I1, I2, I3), the plate body portion (122) is coupled to the inner wall of the side frame (112, 212) around the venting inlet (I, I1, I2, I3).

7. The battery pack (100, 200) of claim 6, wherein the restriction member (130, 1034, 130", 230) is a blocking bracket including a venting hole (132) and a blocking frame (133) configured to block movement of the plate cutout portion (121, 123, 125) in a portion facing the plate cutout portion (121, 123, 125).

8. The battery pack (100, 200) of claim 7, wherein a peripheral portion (131) of the blocking bracket and the plate body portion (122) are fastened together to the inner wall of the side frame (112, 212) around the venting inlet (I, I1, I2, I3) by a fastening member.

9. The battery pack (100, 200) of claim 1, wherein a venting outlet (O) communicating with the gas venting channel (H, H1, H2, H3) is formed in an outer wall of the side frame (112, 212).

10. The battery pack (100, 200) of claim 9, wherein the venting outlet (O) is formed in an outer wall of a side frame (112, 212) disposed perpendicular to the side frame (112, 212) in which the venting inlet (I, I1, I2, I3) is formed.

11. The battery pack (100, 200) of claim 9, further comprising a venting cap (114) covering the venting outlet (O) and extending outward.

12. The battery pack (100, 200) of claim 11, further comprising a gas sealing member (115) installed in the venting outlet (O) or venting cap (114) and deformed at a predetermined pressure and/or predetermined temperature or higher to open the venting outlet (O) to an outside.

13. The battery pack (100, 200) of claim 1, wherein the plate cutout portion (121, 123, 125) is provided as a pair of plate cutout portions (121, 121') formed in the plate body portion (122).

14. The battery pack (100, 200) of claim 1, wherein the gas venting channel (H, H1, H2, H3) is formed as a plurality of gas venting channels (H, H1, H2, H3) at predetermined intervals in a height direction of the side frame (112, 212), and
the venting plate (120, 220) and the restriction member (130, 130', 130", 230) are installed over each of the venting inlets (I, I1, I2, I3) of the inner wall of the side frame (112, 212) communicating with the gas venting channels (H, H1, H2, H3) respectively.

15. The battery pack (100, 200) of claim 14, wherein the venting plate (120, 220) includes one plate body portion (122), and a plurality of plate cutout portions (121, 123, 125, 121', 123', 125') formed at predetermined intervals in the height direction to correspond to the gas venting channels (H, H1, H2, H3) respectively,
in a state in which each of the plate cutout portions (121, 123, 125, 121', 123', 125') is positioned over each of the venting inlets (I, I1, I2, I3), the plate body portion (121, 123, 125, 121', 123', 125') covers an entire periphery of each of the venting inlets (I, I1, I2, I3) of the inner wall of the side frame (112, 212) and is coupled to the side frame (112, 212), and
one restriction member (130, 130', 130", 230) covers the plate cutout portions (121, 123, 125, 121', 123', 125') and is coupled to the venting plate (120, 220).

## Patentansprüche

1. Batteriepack (100, 200), in welchem eine Mehrzahl von Batteriezellen (11) oder eine Mehrzahl von Batteriemodulen (M1-M6) aufgenommen ist, umfassend:
ein Packgehäuse (110, 210), welches einen Seitenrahmen (112, 212) umfasst, in welchem ein Gasentlüftungskanal (H, H1, H2, H3) gebildet ist und von welchem eine Innenwand, welche der Batteriezelle (11) oder dem Batteriemodul (M1-M6) zugewandt ist, mit einem Entlüftungseinlass (I, I1, I2, I3), welcher mit dem Gasentlüftungskanal (H, H1, H2, H3) kommuniziert, an wenigstens einer Position der Innenwand bereitgestellt ist; und
eine Entlüftungsplatte (120, 220), welche einen Plattenausschnittabschnitt (121, 123, 125), welcher von einer figurförmigen Schnittlinie (C) mit einer offenen Seite (121a) umgeben ist und einen Plattenkörperabschnitt (122) umfasst, welcher den Plattenausschnittabschnitt (121) umgibt, den Entlüftungseinlass (I, 11, 12, 13) abdeckt und mit der Innenwand des Seitenrahmens (112, 212) gekoppelt ist;
wobei der Plattenausschnittabschnitt (121, 123, 125) beweglich in den Entlüftungseinlass (I, 11, 12, 13) unter Verwendung einer Seite (121a) davon ist, welche mit dem Plattenkörperabschnitt (122) als Stützachse verbunden ist,
**dadurch gekennzeichnet, dass** der Batteriepack ferner ein Begrenzungselement (130, 130', 130", 230) umfasst, welches den Plattenausschnittabschnitt (121, 123, 125) abdeckt und mit der Entlüftungsplatte (120, 220) innerhalb der Entlüftungsplatte (120, 220) entgegengesetzt zu dem Entlüftungseinlass (I, I1, I2, I3) gekoppelt ist,
wobei das Begrenzungselement (130, 130', 130", 230) dazu eingerichtet ist, zu ermöglichen, dass ein Entlüftungsgas, welches in dem Packgehäuse (110, 210) generiert wird, in Richtung des Entlüftungseinlasses (I, I1, I2, I3) strömt,
wobei eine Bewegung des Plattenausschnittabschnitts (121, 123, 125) in einer Richtung, welche entgegengesetzt zu dem Entlüftungseinlass (I, 11, I2, I3) ist, durch das Begrenzungselement (130, 130', 130", 230) blockiert ist.

2. Batteriepack (100, 200) nach Anspruch 1, wobei der Gasentlüftungskanal (H, H1, H2, H3) in dem Seitenrahmen (112, 212) entlang eines Umfangs der Batteriezelle (11) oder des Batteriemoduls (M1-M6) gebildet ist.

3. Batteriepack (100, 200) nach Anspruch 1, wobei der Entlüftungseinlass (I, **11,** 12, 13) in einer Innenwand jedes der Seitenrahmen (112, 212) an zwei entgegengesetzten Seiten der Batteriezelle (11) oder des Batteriemoduls (M1-M6) gebildet ist, und
die Entlüftungsplatte (120, 220) und das Begrenzungselement (130, 130', 130", 230) über jedem der Entlüftungseinlässe (I, I1, I2, I3) installiert sind.

4. Batteriepack (100, 200) nach Anspruch 1, wobei der Entlüftungseinlass (I, I1, I2, I3) in der Innenwand des Seitenrahmens (112, 212) gebildet ist, welche einem Anschlussabschnitt (12) der Batteriezelle (11) oder einem Anschlussabschnitt des Batteriemoduls (M1-M6) zugewandt ist, und
die Entlüftungsplatte (120, 220) und das Begrenzungselement (130, 130', 130", 230) über dem Entlüftungseinlass (I, I1, I2, I3) installiert sind.

5. Batteriepack (100, 200) nach Anspruch 1, wobei der Entlüftungseinlass (I, I1, I2, I3) derart gebildet ist, dass er eine vorbestimmte Länge in einer longitudinalen Richtung des Seitenrahmens (112, 212) aufweist und der Plattenausschnittabschnitt (121, 123, 125) derart dimensioniert ist, dass er dazu in der Lage ist, in den Entlüftungseinlass (I, I1, I2, I3) eingesetzt zu werden.

6. Batteriepack (100, 200) nach Anspruch 1, wobei in einem Zustand, in welchem der Plattenausschnittabschnitt (121, 123, 125) über dem Entlüftungseinlass (I, I1, I2, I3) positioniert ist, der Plattenkörperabschnitt (122) mit der Innenwand des Seitenrahmens (112, 212) um den Entlüftungseinlass (I, I1, I2, I3) gekoppelt ist.

7. Batteriepack (100, 200) nach Anspruch 6, wobei das Begrenzungselement (130, 1034, 130", 230) eine Blockierklammer ist, welche ein Entlüftungsloch (132) und einen Blockierrahmen (133) umfasst, welcher dazu eingerichtet ist, eine Bewegung des Plattenausschnittabschnitts (121, 123, 125) in einem Abschnitt, welcher dem Plattenausschnittabschnitt (121, 123, 125) zugewandt ist, zu blockieren.

8. Batteriepack (100, 200) nach Anspruch 7, wobei ein Umfangsabschnitt (131) der Blockierklammer und der Plattenkörperabschnitt (122) durch ein Befestigungselement miteinander an der Innenwand des Seitenrahmens (112, 212) um den Entlüftungseinlass (I, I1, I2, I3) befestigt sind.

9. Batteriepack (100, 200) nach Anspruch 1, wobei ein Entlüftungsauslass (O), welcher mit dem Gasentlüftungskanal (H, H1, H2, H3) kommuniziert, in einer Außenwand des Seitenrahmens (112, 212) gebildet ist.

10. Batteriepack (100, 200) nach Anspruch 9, wobei der Entlüftungsauslass (O) in einer Außenwand eines Seitenrahmens (112, 212) gebildet ist, welcher senkrecht zu dem Seitenrahmen (112, 212) angeordnet ist, in welchem der Entlüftungseinlass (I, 11, 12, 13) gebildet ist.

11. Batteriepack (100, 200) nach Anspruch 9, ferner umfassend eine Entlüftungskappe (114), welche den Entlüftungsauslass (O) abdeckt und sich nach außen erstreckt.

12. Batteriepack (100, 200) nach Anspruch 11, ferner umfassend ein Gasdichtungselement (115), welches in dem Entlüftungsauslass (O) oder in der Entlüftungskappe (114) installiert ist und bei einem vorbestimmten Druck und/oder einer vorbestimmten Temperatur oder höher verformt wird, um den Entlüftungsauslass (O) zu einer Außenseite zu öffnen.

13. Batteriepack (100, 200) nach Anspruch 1, wobei der Plattenausschnittabschnitt (121, 123, 125) als ein Paar von Plattenausschnittabschnitten (121, 121') bereitgestellt ist, welche in dem Plattenkörperabschnitt (122) gebildet sind.

14. Batteriepack (100, 200) nach Anspruch 1, wobei der Gasentlüftungskanal (H, H1, H2, H3) als eine Mehrzahl von Gasentlüftungskanälen (H, H1, H2, H3) in vorbestimmten Abständen in einer Höhenrichtung des Seitenrahmens (112, 212) gebildet ist, und
die Entlüftungsplatte (120, 220) und das Begrenzungselement (130, 130', 130", 230) über jedem der Entlüftungseinlässe (I, I1, I2, I3) der Innenwand des Seitenrahmens (112, 212) installiert sind, welche jeweils mit den Gasentlüftungskanälen (H, H1, H2, H3) kommunizieren.

15. Batteriepack (100, 200) nach Anspruch 14, wobei die Entlüftungsplatte (120, 220) einen Plattenkörperabschnitt (122) und eine Mehrzahl von Plattenausschnittabschnitten (121, 123, 125, 121', 123', 125') umfasst, welche in vorbestimmten Abständen in der Höhenrichtung gebildet sind, um jeweils den Gasentlüftungskanälen (H, H1, H2, H3) zu entsprechen,
wobei in einem Zustand, in welchem jeder der Plattenausschnittabschnitte (121, 123, 125, 121', 123', 125') über jedem der Entlüftungseinlässe (I, 11, 12, 13) positioniert ist, der Plattenkörperabschnitt (121, 123, 125, 121', 123', 125') einen gesamten Umfang jedes der Entlüftungseinlässe (I, 11, 12, 13) der Innenwand des Seitenrahmens (112, 212) abdeckt und mit dem Seitenrahmen (112, 212) gekoppelt ist, und
wobei ein Begrenzungselement (130, 130', 130", 230) die Plattenausschnittabschnitte (121, 123, 125, 121', 123', 125') abdeckt und mit der Entlüftungsplatte (120, 220) gekoppelt ist.

## Revendications

1. Bloc-batterie (100, 200) dans lequel sont logés une pluralité d'éléments de batterie (11) ou une pluralité de modules de batterie (M1-M6), comprenant :
un boîtier de bloc (110, 210) comportant un cadre latéral (112, 212) dans lequel un canal de ventilation de gaz (H, H1, H2, H3) est formé et dont une paroi interne faisant face à l'élément de batterie (11) ou au module de batterie (M1-M6) est dotée d'une entrée de ventilation (I, I1, I2, I3) communiquant avec le canal de ventilation de gaz (H, H1, H2, H3) à au moins une position de la paroi interne ; et
une plaque de ventilation (120, 220) comportant une partie découpée de plaque (121, 123, 125) entourée d'une ligne de découpe en forme de figure (C) avec un côté ouvert (121a) et une partie de corps de plaque (122) entourant la partie découpée de plaque (121), recouvrant l'entrée de ventilation (I, I1, I2, I3), et couplée à la paroi interne du cadre latéral (112, 212) ;
dans lequel la partie découpée de plaque (121, 123, 125) est mobile dans l'entrée de ventilation (I, I1, I2, I3) en utilisant un côté (121a) de celle-ci relié à la partie de corps de plaque (122) comme axe de support,
**caractérisé en ce que** le bloc-batterie comprend en outre un organe de restriction (130, 130', 130", 230) recouvrant la partie découpée de plaque (121, 123, 125) et couplé à la plaque de ventilation (120, 220) à l'intérieur de la plaque de ventilation (120, 220) opposée à l'entrée de ventilation (I, I1, I2, I3),
dans lequel l'organe de restriction (130, 130', 130", 230) est configuré pour permettre à un gaz de ventilation généré dans le boîtier de bloc (110, 210) de s'écouler vers l'entrée de ventilation (I, I1, I2, I3),
dans lequel le déplacement de la partie découpée de plaque (121, 123, 125) dans une direction opposée à l'entrée de ventilation (I, I1, I2, I3) est bloqué par l'organe de restriction (130, 130', 130", 230).

2. Bloc-batterie (100, 200) selon la revendication 1, dans lequel le canal de ventilation de gaz (H, H1, H2, H3) est formé dans le cadre latéral (112, 212) le long d'un périmètre de l'élément de batterie (11) ou du module de batterie (M1-M6).

3. Bloc-batterie (100, 200) selon la revendication 1, dans lequel l'entrée de ventilation (I, I1, I2, I3) est formée dans une paroi interne de chacun des cadres latéraux (112, 212) sur deux côtés opposés de l'élément de batterie (11) ou du module de batterie, (M1-M6) et
la plaque de ventilation (120, 220) et l'organe de restriction (130, 130', 130", 230) sont installés sur chacune des entrées de ventilation (I, I1, I2, I3).

4. Bloc-batterie (100, 200) selon la revendication 1, dans lequel l'entrée de ventilation (I, I1, I2, I3) est formée dans la paroi interne du cadre latéral (112, 212) faisant face à une partie terminale (12) de l'élément de batterie (11) ou à une partie terminale du module de batterie (M1-M6), et
la plaque de ventilation (120, 220) et l'organe de restriction (130, 130', 130", 230) sont installés sur l'entrée de ventilation (I, I1, I2, I3).

5. Bloc-batterie (100, 200) selon la revendication 1, dans lequel l'entrée de ventilation (I, I1, I2, I3) est formée pour avoir une longueur prédéterminée dans une direction longitudinale du cadre latéral (112, 212), et la partie découpée de plaque (121, 123, 125) est dimensionnée pour pouvoir être insérée dans l'entrée de ventilation (I, I1, I2, I3).

6. Bloc-batterie (100, 200) selon la revendication 1, dans lequel, dans un état dans lequel la partie découpée de plaque (121, 123), 125) est positionnée au-dessus de l'entrée de ventilation (I, I1, I2, I3), la partie de corps de plaque (122) est couplée à la paroi interne du cadre latéral (112, 212) autour de l'entrée de ventilation (I, I1, I2, I3).

7. Bloc-batterie (100, 200) selon la revendication 6, dans lequel l'organe de restriction (130, 1034, 130", 230) est un support de blocage comportant un trou de ventilation (132) et un cadre de blocage (133) configuré pour bloquer le mouvement de la partie découpée de plaque (121, 123, 125) dans une partie faisant face à la partie découpée de plaque (121, 123, 125).

8. Bloc-batterie (100, 200) selon la revendication 7, dans lequel une partie périphérique (131) du support de blocage et la partie de corps de plaque (122) sont fixées ensemble à la paroi interne du cadre latéral (112, 212) autour de l'entrée de ventilation (I, I1, I2, I3) par un organe de fixation.

9. Bloc-batterie (100, 200) selon la revendication 1, dans lequel une sortie de ventilation (O) communiquant avec le canal de ventilation de gaz (H, H1, H2, H3) est formée dans une paroi externe du cadre latéral (112, 212).

10. Bloc-batterie (100, 200) selon la revendication 9, dans lequel la sortie de ventilation (O) est formée dans une paroi externe d'un cadre latéral (112, 212) disposé perpendiculairement au cadre latéral (112, 212) dans lequel l'entrée de ventilation (I, I1, I2, I3) est formée.

11. Bloc-batterie (100, 200) selon la revendication 9, comprenant en outre un capuchon de ventilation (114) recouvrant la sortie de ventilation (O) et s'étendant vers l'extérieur.

12. Bloc-batterie (100, 200) selon la revendication 11, comprenant en outre un organe d'étanchéité aux gaz (115) installé dans la sortie de ventilation (O) ou le capuchon de ventilation (114) et déformé à une pression prédéterminée et/ou à une température prédéterminée ou supérieure pour ouvrir la sortie de ventilation (O) vers un extérieur.

13. Bloc-batterie (100, 200) selon la revendication 1, dans lequel la partie découpée de plaque (121, 123, 125) est fournie sous la forme d'une paire de parties de découpe de plaque (121, 121') formées dans la partie de corps de plaque (122).

14. Bloc-batterie (100, 200) selon la revendication 1, dans lequel le canal de ventilation de gaz (H, H1, H2, H3) est formé sous la forme d'une pluralité de canaux de ventilation de gaz (H, H1, H2, H3) à des intervalles prédéterminés dans une direction de hauteur du cadre latéral (112, 212), et
la plaque de ventilation (120, 220) et l'organe de restriction (130, 130', 130", 230) sont respectivement installés sur chacune des entrées de ventilation (I, I1, I2, I3) de la paroi interne du cadre latéral (112, 212) communiquant avec les canaux de ventilation de gaz (H, H1, H2, H3).

15. Bloc-batterie (100, 200) selon la revendication 14, dans lequel la plaque de ventilation (120, 220) comporte une partie de corps de plaque (122), et une pluralité de parties de découpe de plaque (121, 123, 125, 121', 123', 125') respectivement formées à des intervalles prédéterminés dans la direction de hauteur pour correspondre aux canaux de ventilation de gaz (H, H1, H2, H3),
dans un état dans lequel chacune des parties de découpe de plaque (121, 123, 125, 121', 123', 125') est positionnée sur chacune des entrées de ventilation (I, I1, I2, I3), la partie de corps de plaque (121, 123, 125, 121', 123', 125') couvre toute une périphérie de chacune des entrées de ventilation (I, I1, 12, I3) de la paroi interne du cadre latéral (112, 212) et est couplée au cadre latéral (112, 212), et
un organe de restriction (130, 130', 130", 230) recouvre les parties de découpe de plaque (121, 123, 125, 121', 123', 125') et est couplé à la plaque de ventilation (120, 220).
